# EUROPEAN PATENT SPECIFICATION

(11) **EP 0 569 226 B1**
(45) Date of publication and mention of the grant of the patent: **21.08.1996**
(21) Application number: 93303484.5
(22) Date of filing: 05.05.1993
(51) Int. Cl.: F16G 11/10

(54) **Cord clamps**
Seilklemmen
Dispositif de blocage de corde

(30) Priority: 06.05.1992 US 880096
(43) Date of publication of application: 10.11.1993
(73) Proprietor: ILLINOIS TOOL WORKS INC., Glenview, Illinois 60025-5811 (US)
(72) Inventor: Meier, Terrence P., Naperville, Illinois 60540 (US); Lundstedt, Kurt H., Long Grove, Illinois 60047 (US)
(74) Representative: Gordon, Michael Vincent

(56) References cited:
- EP-A- 0 228 656
- US-A- 4 328 605
- US-A- 4 453 292
- US-A- 4 622 723
- US-A- 4 675 948

## Description

This invention relates to cord clamps, by which is meant fasteners to be releasably attached to, at selected positions along the lengths of, cords or drawstrings or the like as found on helmets, hats, sleeping bags, hooded parkas, backpacks or clothing.

Generally, cord clamps include telescoping cylinders having co-operating lateral apertures urged apart by a compression spring. Initially, the cylinders must be manually urged towards one another against the force of the spring to align the apertures in the cylinders prior to insertion of the cord. When the force on the cylinders is released, the spring causes opposing edges of the apertures in the cylinders to clamp the cord.

Such prior art cord clamps have the disadvantage that a very tedious and time-consuming adjustment is necessary so as to align the apertures in the respective cylinders manually before the cord can be assembled onto the cord clamp, thereby increasing labour costs. It would be desirable to provide an improved cord clamp which eliminates this need of initially aligning manually the apertures in the respective cylinders. Such an improved cord clamp would also help to avoid carpal tunnel syndrome because there would be no repetitive squeezing to allow alignment of the apertures when inserting the cord during initial assembly.

US-A-4328605 discloses a cord clamp which includes a main body or sleeve, a piston or plunger, a cap and a compression spring. The plunger and the sleeve are mounted together in close fitting telescopic engagement so that they are axially movable with respect to one another. The compression spring is then positioned in the sleeve, and the cap is then placed in sealing relationship to the sleeve so as to retain the spring between the cap and the plunger. The spring normally biases the sleeve and the plunger in a first position wherein a bore in the plunger is not in register with holes in the sleeve. As the plunger is moved towards the interior of the sleeve against the force of the spring to a second position, the holes and the bore become registered in alignment.

US-A-4453292 discloses a cord lock which includes a cylinder, a plunger and a helical compression biasing spring trapped therebetween. A pair of teeth formed on the plunger ride in lead-in ramps disposed inwardly of the cylinder's open end when the plunger is assembled into the cylinder by being moved axially towards the closed end of the cylinder. As a result, the teeth cam over the ramps and shoulders of the teeth snap into a respective pair of aligned lateral apertures to retain the plunger in assembled relation to the cylinder.

US-A-4622723 discloses a cord lock which includes a housing having a bottom wall so as to form a recess and opposed side walls with holes and an insert slidably received in the recess. The insert includes a plunger portion and an integral W-shaped spring portion disposed on the end thereof. The plunger portion is formed with a throughhole. When the plunger is depressed and the spring is compressed, the plunger throughhole aligns with the holes on the housing sides so as to receive a cord.

US-A-4675948 includes a cord locking device which includes a sleeve and a latching slide insertable therein. The latching slide comprises a body terminating outwardly in a head, and a spring formed of a zig-zag material is made integral with the body. The sleeve includes openings formed on the long sides thereof, and an opening is formed in the body which is placeable in register with the openings in the sleeve.

Accordingly, it is a general object of the present invention to provide an improved cord clamp which is relatively simple and economical to use and manufacture, but yet overcomes the disadvantages of the prior art cord clamps.

More specifically, it is an object of the present invention to provide an improved cord clamp which includes means for holding a sub-assembly in a pre-assembled position with resilient means being compressed so that a throughhole of plunger means and a pair of holes of housing means can be readily aligned for insertion of a cord.

According to the present invention, a cord clamp comprises:
housing means having a surrounding outer side wall extending between a first end and a second end to form a cavity therebetween, said housing means having a pair of holes formed in the outer side wall at diametrically opposed positions for use in receiving a cord;
plunger means having a transverse throughhole extending diametrically therethrough; and
resilient means for urging said plunger means towards said first end of said housing means to move said throughhole out of alignment with said pair of holes in said housing means;
characterised in that holding means is provided for holding said plunger means and said resilient means in a pre-assembled position before insertion of a cord, and releasing means is provided for releasing said plunger means and said resilient means from said pre-assembled position after insertion of said cord;
said holding means including a locking portion presented by an inwardly deflectable part of said plunger means and also including a retaining ring so that, in said pre-assembled position, said resilient means is retained in a compressed state by engagement with said retaining ring which is retained around said inwardly deflectable part by engagement with said locking portion, thus allowing said throughhole of said plunger means and said pair of holes of said housing means to be readily aligned for insertion of said cord; and
said releasing means causing said locking portion to be deflected inwardly through said retaining ring when said plunger means is moved towards said second end of said housing means, thus freeing said resilient means which expands and urges said plunger means towards said first end of said housing means to clamp said cord.

Preferably, said housing means is open at said first end and is closed at said second end; said plunger means has a head, a body portion and a stem portion, said body portion joining said head to said stem portion and having said transverse throughhole extending diametrically therethrough; said resilient means is a compression spring positioned over said stem portion and having a first end thereof engaging said body portion and a second end; said retaining ring has an upstanding portion positioned into the second end of said compression spring; and said locking portion is formed on said stem portion which is resiliently inwardly deflectable relatively to said body portion.

In one arrangement, said locking portion includes a pair of resilient legs having locking prongs with lateral shoulders lockingly engageable with a bottom surface of said retaining ring. In another arrangement, said locking portion includes a W-shaped portion having locking prongs with lateral shoulders lockingly engageable with a bottom surface of said retaining ring.

Said releasing means may include a central recess formed in the interior of said closed end of said housing means to permit said prongs to flex inwardly for disengagement from said retaining ring.

Conveniently, said housing means has a generally cylindrical configuration, and said plunger means also has a generally cylindrical configuration.

Preferably, said plunger means has a pair of ribs formed thereon which are retained by edges of said pair of holes nearer to said first end of said housing means so as to prevent disengagement of said plunger means from said housing means, and said housing means has slots formed in said outer side wall thereof for receiving said pair of ribs.

The housing means and the plunger means may be formed of a high strength material such as a plastics material.

A cord clamp, and a modification thereof, in accordance with the present invention, will now be described in greater detail, by way of example only, with reference to the accompanying drawings, wherein:-
Figure 1 is a perspective view of a cord clamp according to the present invention, illustrated in its fully assembled condition;
Figure 2 is an exploded perspective view of the cord clamp of Figure 1;
Figure 3 is a front view of the plunger of the cord clamp of Figure 1;
Figure 4 is a cross-sectional view, taken along the line 4-4 of Figure 3;
Figure 5 is a bottom end view, taken along the line 5-5 of Figure 3;
Figure 6 is a top plan view of the body housing of the cord clamp of Figure 1;
Figure 7 is a cross-sectional view, taken along the line 7-7 of Figure 6;
Figure 8 is a cross-sectional view, taken along the line 8-8 of Figure 6;
Figure 9 is a top plan view of the retaining ring of the cord clamp of Figure 1;
Figure 10 is a cross-sectional view, taken along the line 10-10 of Figure 9;
Figure 11 is a front view of an alternative stem portion modifying the plunger of Figure 3;
Figure 12 is a side elevational view, taken along the line 12-12 of Figure 11;
Figure 13 is a bottom end view, taken along the line 13-13 of Figure 11;
Figure 14 is a longitudinal sectional view, taken along the line 14-14 of Figure 1, but illustrating the position when the spring is compressed to allow insertion of the cord; and
Figure 15 is a view similar to Figure 14, but turned 90° therefrom, illustrating the position when the spring is expanded to allow clamping of the cord.

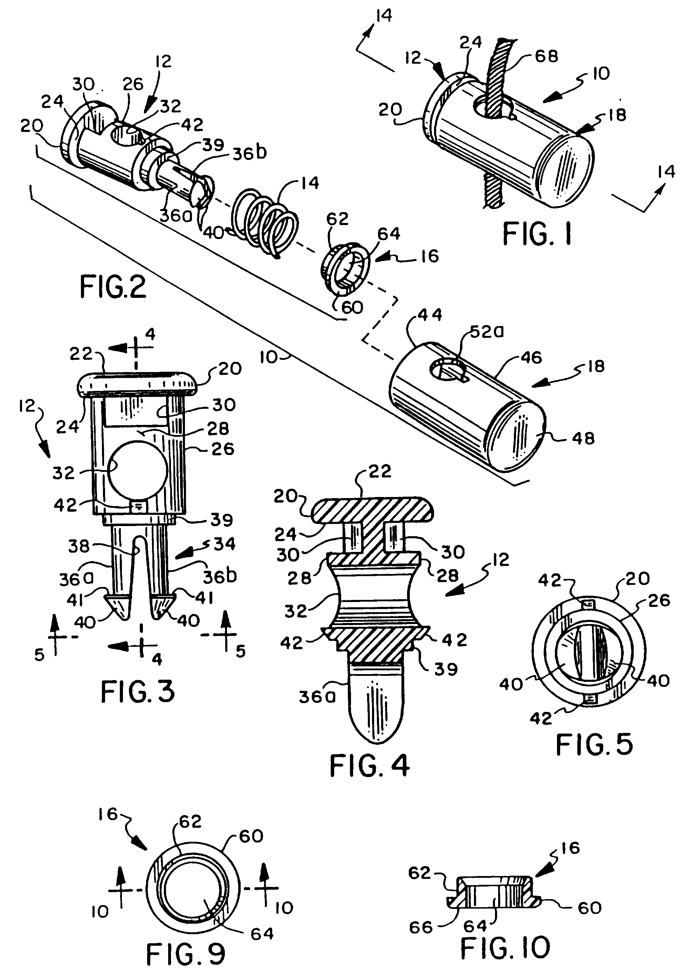

In the accompanying drawings, Figure 1 shows a cord clamp designated generally by reference numeral 10 and constructed in accordance with the present invention. The cord clamp 10 is adapted for releasably fastening to one or more flexible cords, drawstrings, ropes and the like after having been slid relatively thereto to a selected position. Figure 2 shows that the cord clamp 10 comprises a plunger 12, a helical compression biasing spring 14, a retaining ring 16, and a body housing 18.

The plunger 12, retaining ring 16, and body housing 18 each may be formed of a number of materials having a relatively high strength and a high dimensional stability. The cord clamp 10 has particular applications in devices employing drawstrings, such as on helmets, hats, sleeping bags, hooded parkas, backpacks, garments and the like, since the cord clamp according to the present invention eliminates the need of manually aligning apertures in the plunger 12 and the body housing 18 prior to insertion of the drawstrings, thereby facilitating assembly and thus reducing labour costs. It further avoids the possibility that the installer will develop carpal tunnel syndrome.

Referring now to Figures 3 to 5, it can be seen that the plunger 12 includes a cylindrical head 20 having a flat top surface 22 and a flat bottom surface 24. A body portion 26 extends axially from the bottom surface 24 and is of a generally cylindrical construction with arcuate surfaces 28 disposed on diametrically opposite sides thereof. A pair of recesses 30 are formed in the upper part of the body portion 26 immediately underlying the head 20 so as to eliminate a large mass of material in an area which might cause problems during manufacturing. In the general intermediate area of the arcuate surfaces 28 of the body portion 26, there is provided a transverse throughhole 32 extending diametrically therethrough and having an axis perpendicular to the longitudinal axis of the plunger. The throughhole 32 is adapted to be aligned with apertures or holes in the body housing 18, as will be more fully explained hereinafter.

A stem portion 34 is formed integrally with and extends from the lower part of the body portion 26 terminating in a pair of resilient legs 36a, 36b separated by an inverted U-shaped slot 38. The legs are joined to the lower part of the body portion 26 by a cylindrical neck 39 of a reduced diameter. Each of the resilient legs has a releasable locking prong 40 having a lateral shoulder 41 disposed on its distal end for locking engagement with the retaining ring 16, as will be presently described. A pair of opposed small wedge-like projections or ribs 42 are formed diametrically on the exterior surface of the lower part of the body portion 26 adjacent the lower mid-section of the throughhole 32. The ribs 42 serve to retain the plunger 12 in the body housing 18.

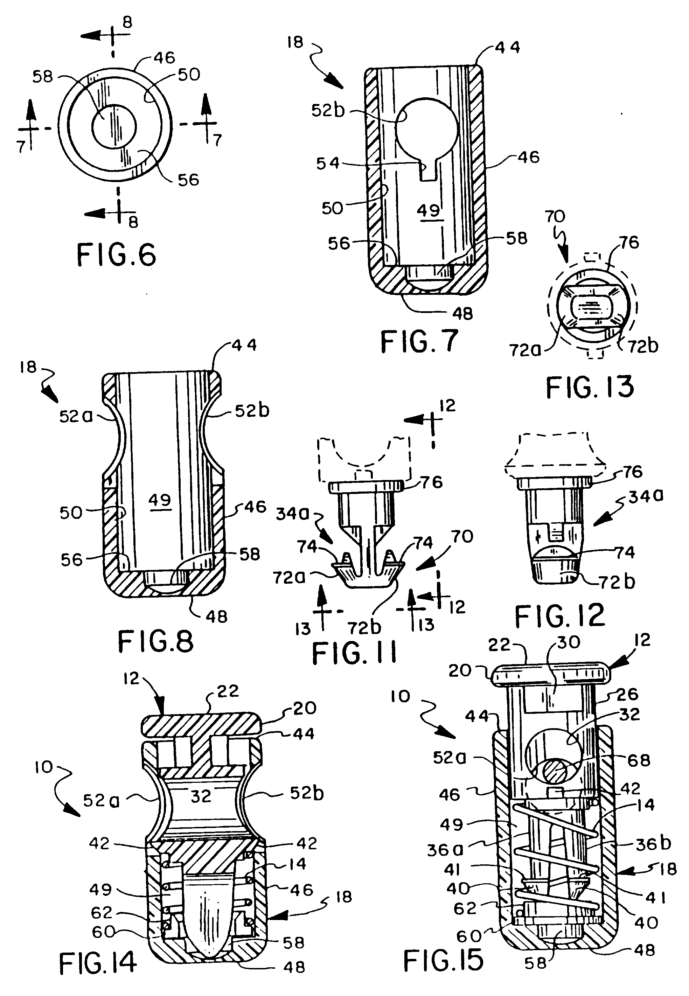

As can be seen from Figures 6 to 8, the body housing 18 is formed of a generally cylindrical shape and is hollow so as to telescopically receive the plunger 12 in a close fitting engagement. It should be appreciated, however, to those skilled in the art that other geometrical configurations may be employed. To this end, the body housing 18 includes an opened end 44, a surrounding outer side wall 46, and a closed end 48. A cavity 49 is defined by the interior wall surface 50 of the side wall 46 extending between the opened end 44 and the closed end 48. A pair of opposed holes or bores 52a, 52b are formed in the intermediate area of the side wall 46 at diametrically opposed positions with respect to one another. A pair of opposed slots 54 are formed diametrically in the side wall 46 adjacent to the lower mid-section of the opposed holes 52a, 52b for receiving the projections or ribs 42 of the plunger 12.

As a practical matter, the inner diameter of the interior wall surface 50 is slightly larger than the external diameter of the body portion 26 of the plunger 12. The closed end 48 of the body housing 18 is defined by an end wall 56 which is provided internally with a small central recess 58. The purpose of this recess 58 will be understood shortly hereinafter.

It will be noted from Figures 9 and 10 that the retaining ring 16 has an annular flange 60 whose outer diameter is somewhat larger than the recess 58 and also has an upstanding circular wall portion 62 formed integrally with the flange 60 and spaced inwardly therefrom to form an internal bore 64. The annular flange 60 has a bottom surface 66 and the outer diameter of the upstanding portion 62 is slightly smaller than the inner diameter of the compression spring 14.

In order to assemble the plunger 12, compression spring 14, and retaining ring 16 into a "pre-assembled" position, the compression spring 14 is placed over the stem portion 34 of the plunger 12 and comes to rest on the bottom surface of the plunger body portion 26 so as to surround the neck 39. The diameter of the neck 39 is slightly smaller than the inner diameter of the spring 14 so that it may be frictionally mounted into one end of the spring 14. The upstanding wall portion 62 of the retaining ring 16 is inserted into the other end of the spring 14 and is forced into engagement with the resilient legs 36a, 36b of the stem portion 34 when the spring 14 is sufficiently compressed.

As the prongs 40 are forced into the internal bore 64 of the retaining ring 16, the resilient legs 36a and 36b are caused to collapse or flex inwardly to allow the prongs 40 to pass through the internal bore 64 and snap outwardly so that the lateral shoulders 41 will lockingly engage the bottom surface 66 of the flange 60 of the retaining ring 16. The shoulders 41 serve to hold or lock the spring 14 in a compressed state between the bottom surface of the plunger body portion 26 and the upper surface of the retaining ring annular flange 60. As a result, the sub-assembly of the plunger, spring and retaining ring into the pre-assembled position has been finished.

Next, to complete the assembly of the sub-assembly and the body housing 18 into the cord clamp 10, the sub-assembly is inserted telescopically into the cavity 49 of the body housing 18. The ribs 42 on the body portion 26 of the plunger 12 force outwardly the opened end 44 and snap past upper edges of the holes 52a, 52b in the body housing 18. The ribs 42 on the plunger body portion 26 are retained by the upper edges of the holes 52a, 52b so as to prevent the sub-assembly from coming apart from the body housing 18. In the absence of a tight interference fit, the sub-assembly will actually be "floating" or readily movable within the body housing 18. As axial pressure is subsequently applied to the head 20 of the plunger 12, the ribs 42 will slide along lower edges of the holes 52a, 52b and then slightly into the slots 54, thereby co-axially aligning the throughhole 32 of the plunger 12 with the holes 52a, 52b of the body housing 18. Consequently, a cord or drawstring 68, shown in Figure 1, can now be simply inserted and threaded through the hole 52a, the throughhole 32, and the hole 52b without requiring the user to initially depress and hold the parts in alignment while threading the cord.

In operation, the cord clamp 10 is gripped edgewise by the user between the head 20 and the closed end 48, and the head 20 is further depressed downwardly into the body housing 18 from its resting position so as to cause the prongs 40 to flex inwardly due to the small recess 58. It will be noted that this downward movement of the plunger is permitted by the ribs 42 on the plunger body portion 26 riding further into the co-mating slots 54 formed in the side wall 46 on the body housing 18. As a result, the prongs 40 become disengaged from the bottom surface 66 of the retaining ring 16 and the retaining ring 16 snaps past the lateral shoulders 41 of the prongs 40 to come to rest on the interior surface of the end wall 56 of the body housing 18 adjacent to the central recess 58, as shown in Figure 14. If the plunger 12 is now released, the spring 14 will cause the plunger 12 to move up axially. The drawstring 68 is therefore gripped firmly by and between the plunger 12 and the body housing 18 against accidental displacement, as shown in Figure 15.

Figures 11 to 13 illustrate a modified stem portion 34a for use in the plunger 12. The stem portion 34a is substantially the same as the stem portion 34 shown in Figure 3, which it replaces, except that it terminates in a W-shaped lower end portion 70 so as to form locking prongs 72a, 72b having lateral shoulders 74. With the shoulders 74 and a neck 76 thus provided, the bottom surface 66 of the retaining ring 16 can be releasably locked with the prongs 72a, 72b (identical to the prongs already shown in Figure 3) to compress the spring 14 between the neck 76 and the annular flange 60 of the retaining ring 16, again producing a pre-assembled sub-assembly. The operation of the stem portion 34a is identical to the stem portion 34 of Figure 3 and thus will not be repeated.

## Claims

1. A cord clamp (10) comprising:
housing means (18) having a surrounding outer side wall (46) extending between a first end (44) and a second end (48) to form a cavity (49) therebetween, said housing means (18) having a pair of holes (52a, 52b) formed in the outer side wall (46) at diametrically opposed positions for use in receiving a cord (68);
plunger means (12) having a transverse throughhole (32) extending diametrically therethrough; and
resilient means (14) for urging said plunger means (12) towards said first end (44) of said housing means (18) to move said throughhole (32) out of alignment with said pair of holes (52a, 52b) in said housing means (18);
characterised in that holding means (16; 41,74) is provided for holding said plunger means (12) and said resilient means (14) in a pre-assembled position before insertion of a cord (68), and releasing means (58) is provided for releasing said plunger means (12) and said resilient means (14) from said pre-assembled position after insertion of said cord (68);
said holding means (16; 41,74) including a locking portion (41; 74) presented by an inwardly deflectable part (34; 34a) of said plunger means (12) and also including a retaining ring (16) so that, in said pre-assembled position, said resilient means (14) is retained in a compressed state by engagement with said retaining ring (16) which is retained around said inwardly deflectable part (34; 34a) by engagement with said locking portion (41; 74), thus allowing said throughhole (32) of said plunger means (12) and said pair of holes (52a, 52b) of said housing means (18) to be readily aligned for insertion of said cord (68); and
said releasing means (58) causing said locking portion (41; 74) to be deflected inwardly through said retaining ring (16) when said plunger means (12) is moved towards said second end (48) of said housing means (18), thus freeing said resilient means (14) which expands and urges said plunger means (12) towards said first end (44) of said housing means (18) to clamp said cord (68).

2. A cord clamp according to claim 1, characterised in that said housing means (18) is open at said first end (44) and is closed at said second end (48); said plunger means (12) has a head (20), a body portion (26) and a stem portion (34; 34a), said body portion (26) joining said head (20) to said stem portion (34; 34a) and having said transverse throughhole (32) extending diametrically therethrough; said resilient means is a compression spring (14) positioned over said stem portion (34; 34a) and having a first end thereof engaging said body portion (26) and a second end; said retaining ring (16) has an upstanding portion (62) positioned into the second end of said compression spring (14); and said locking portion (41; 74) is formed on said stem portion (34; 34a) which is resiliently inwardly deflectable relatively to said body portion (26).

3. A cord clamp according to claim 2, characterised in that said locking portion includes a pair of resilient legs (36a, 36b) having locking prongs (40) with lateral shoulders (41) lockingly engageable with a bottom surface (66) of said retaining ring (16).

4. A cord clamp according to claim 2, characterised in that said locking portion includes a W-shaped portion (70) having locking prongs (72a, 72b) with lateral shoulders (74) lockingly engageable with a bottom surface (66) of said retaining ring (16).

5. A cord clamp according to claim 3 or claim 4, characterised in that said releasing means includes a central recess (58) formed in the interior of said closed end (48) of said housing means (18) to permit said prongs (40; 72a, 72b) to flex inwardly for disengagement from said retaining ring (16).

6. A cord clamp according to any preceding claim, characterised in that said housing means (18) has a generally cylindrical configuration, and said plunger means (12) also has a generally cylindrical configuration.

7. A cord clamp according to any preceding claim, characterised in that said plunger means (12) has a pair of ribs (42) formed thereon which are retained by edges of said pair of holes (52a, 52b) nearer to said first end (44) of said housing means (18) so as to prevent disengagement of said plunger means (12) from said housing means (18).

8. A cord clamp according to claim 7, characterised in that said housing means (18) has slots (54) formed in said outer side wall (46) thereof for receiving said pair of ribs (42).

9. A cord clamp according to any preceding claim, characterised in that said housing means (18) and said plunger means (12) are formed of a high strength material.

## Patentansprüche

1. Schnurklemme (10), die aufweist:
ein Gehäusemittel (18) mit einer umgebenden Außenseitenwand (46), die sich zwischen einem ersten Ende (44) und einem zweiten Ende (48) erstreckt, um dazwischen einen Hohlraum (49) zu bilden, wobei das Gehäusemittel (18) ein Paar Löcher (52a, 52b) aufweist, die in der Außenseitenwand (46) an diametrisch gegenüberliegenden Stellen zum Aufnehmen einer Schnur (68) geformt sind; ein Kolbenmittel (12) mit einem querverlaufenden Durchgangsloch (32), das sich diametrisch durch das Mittel hindurcherstreckt; und
ein Federmittel (14) zum Drücken des Kolbenmittels (12) gegen das erste Ende (44) des Gehäusemittels (18), um das Durchgangsloch (32) aus der Ausrichtung mit dem Paar Löcher (52a, 52b) in dem Gehäusemittel (18) herauszubewegen;
dadurch gekennzeichnet, daß Haltemittel (16; 41, 74) zum Halten des Kolbenmittels (12) und des Federmittels (14) in einer vor-zusammengesetzten Position vor Einfügung einer Schnur (68) vorgesehen sind und ein Freigabemittel (58) zum Freigeben des Kolbenmittels (12) und des Federmittels (14) aus der vor-zusammengesetzten Position nach der Einfügung der Schnur (68) vorgesehen ist;
wobei die Haltemittel (16; 41, 74) einen Verriegelungsabschnitt (41; 74) aufweisen, der durch einen nach innen biegbaren Teil (34; 34a) des Kolbenmittels (12) dargestellt ist, und ferner einen Haltering (16), so daß in der vor-zusammengesetzten Position das Federmittel (14) in einem zusammengedrückten Zustand durch Eingriff mit dem Haltering (16) gehalten ist, der um den nach innen biegbaren Teil (34; 34a) durch Eingriff mit dem Verriegelungsabschnitt (41; 74) gehalten ist, wodurch dem Durchgangsloch (32) des Kolbenmittels (12) und dem Paar Löcher (52a, 52b) des Gehäusemittels (18) ermöglicht ist, einfach zur Einfügung der Schnur (68) ausgerichtet zu werden; und
wobei das Freigabemittel (58) bewirkt, daß der Verriegelungsabschnitt (41; 74) nach innen durch den Haltering (16) gebogen wird, wenn das Kolbenmittel (12) zu dem zweiten Ende (48) des Gehäusemittels (18) hin bewegt wird, wodurch das Federmittel (14) befreit wird, das sich streckt und das Kolbenmittel (12) zu dem ersten Ende (44) des Gehäusemittels (18) drückt, um die Schnur (68) einzuklemmen.

2. Schnurklemme nach Anspruch 1, dadurch gekennzeichnet, daß das Gehäusemittel (18) an dem ersten Ende (44) offen und an dem zweiten Ende (48) geschlossen ist; das Kolbenmittel (12) einen Kopf (20), einen Rumpfabschnitt (26) und einen Schaftabschnitt (34; 34a) aufweist, wobei der Rumpfabschnitt (26) den Kopf (20) mit dem Schaftabschnitt (34; 34a) verbindet und ein querverlaufendes Durchgangsloch (32) aufweist, das sich diametrisch durch den Rumpfabschnitt hindurcherstreckt; das Federmittel eine Druckfeder (14) ist, die über dem Schaftabschnitt (34; 34a) positioniert ist und ein erstes mit dem Rumpfabschnitt (26) eingreifendes Ende und ein zweites Ende hat; der Haltering (16) einen aufrechten Abschnitt (62) hat, der in dem zweiten Ende der Druckfeder (14) positioniert ist; und der Verriegelungsabschnitt (41; 74) auf dem Schaftabschnitt (34; 34a) ausgebildet ist, der elastisch nach innen relativ zu dem Rumpfabschnitt (26) biegbar ist.

3. Schnurklemme nach Anspruch 2, dadurch gekennzeichnet, daß der Verriegelungsabschnitt ein Paar elastischer Beine (36a, 36b) mit Verriegelungsklauen (40) aufweist, die seitliche Schulter (41) aufweisen, die verriegelnd mit einer Bodenfläche (66) des Halterings (16) in Eingriff gebracht werden können.

4. Schnurklemme nach Anspruch 2, dadurch gekennzeichnet, daß der Verriegelungsabschnitt einen W-förmigen Abschnitt (70) mit Verriegelungsklauen (72a, 72b) aufweist, die seitliche Schultern (74) aufweisen, die verriegelnd mit einer Bodenfläche (66) des Halterings (16) in Eingriff gebracht werden können.

5. Schnurklemme nach Anspruch 3 oder Anspruch 4, dadurch gekennzeichnet, daß das Freigabemittel eine zentrale Vertiefung (58) aufweist, die im Inneren des geschlossenen Endes (48) des Gehäusemittels (18) ausgebildet ist, um den Klauen (40; 72a, 72b) zu ermöglichen, sich nach innen zum Lösen von dem Haltering (16) zu biegen.

6. Schnurklemme nach einem der vorhergehenden Ansprüche, dadurch gekennzeichnet, daß das Gehäusemittel (18) eine allgemein zylindrische Konfiguration besitzt und das Kolbenmittel (12) ebenfalls eine allgemein zylindrische Konfiguration besitzt.

7. Schnurklemme nach einem der vorhergehenden Ansprüche, dadurch gekennzeichnet, daß das Kolbenmittel (12) ein Paar auf ihm ausgebildete Rippen (42) aufweist, die durch sich näher an dem ersten Ende (44) des Gehäusemittels (18) befindende Ränder des Paars Löcher (52a, 52b) gehalten werden, so daß ein Lösen des Kolbenmittels (12) von dem Gehäusemittel (18) verhindert wird.

8. Schnurklemme nach Anspruch 7, dadurch gekennzeichnet, daß das Gehäusemittel (18) Schlitze (54) aufweist, die in seiner Außenseitenwand (46) zum Aufnehmen des Paars Rippen (42) ausgebildet sind.

9. Schnurklemme nach einem der vorhergehenden Ansprüche, dadurch gekennzeichnet, daß das Gehäusemittel (18) und das Kolbenmittel (12) aus einem hochfesten Material gebildet sind.

## Revendications

1. Dispositif de blocage de corde (10) comprenant :
un moyen de logement (18) ayant une paroi latérale extérieure (46) environnante, s'étendant entre une première extrémité (44) et une deuxième extrémité (48) pour former entre elles une cavité (49), ledit moyen de logement (18) ayant un couple de trous (52a, 52b) formé dans la paroi latérale extérieure (46), en des positions diamétralement opposées pour servir à loger une corde (68);
un moyen formant piston (12) ayant un trou traversant (32) transversal s'étendant diamétralement en son sein; et
un moyen élastique (14) pour pousser ledit moyen formant piston (12) vers ladite première extrémité (44) dudit moyen de logement (18), pour décaler ledit trou traversant (32) par rapport audit couple de trous (52a, 52b) ménagé dans ledit moyen de logement (18);
caractérisé en ce que des moyens de maintien (16; 41, 74) sont destinés à maintenir ledit moyen formant piston (12) et ledit moyen élastique (14) en une position pré-assemblée, avant l'insertion d'une corde (68), et un moyen de libération (58) est destiné à libérer ledit moyen formant piston (12) et ledit moyen élastique (14) depuis ladite position pré-assemblée, après l'insertion de ladite corde (68);
lesdits moyens de maintien (16; 41, 74) comprenant une partie de verrouillage (41; 74) présentée par une partie (34; 34a) déformable vers l'intérieur dudit moyen formant piston (12) et comprenant également une bague de maintien (16) de manière que, dans ladite position pré-assemblée, ledit moyen élastique (14) soit maintenu dans un état pressé par un contact avec ladite bague de maintien (16) qui est maintenue autour de ladite partie (34; 34a) déformable vers l'intérieur, par un contact avec ladite partie de verrouillage (41; 74), permettant ainsi audit trou traversant (32) dudit moyen formant piston (12) et audit couple de trous (52a; 52b) dudit moyen de logement (18) d'être facilement alignés pour l'insertion de ladite corde (68); et
ledit moyen de libération (58) forçant ladite partie de verrouillage (41; 74) à être déviée vers l'intérieur de ladite bague de maintien (16), lorsque ledit moyen formant piston (12) est déplacé vers ladite deuxième extrémité (48) dudit moyen de logement (18), libérant ainsi ledit moyen élastique (14) qui se dilate et pousse ledit moyen formant piston (12) vers ladite première extrémité (44) dudit moyen de logement (18), pour bloquer ladite corde (68).

2. Dispositif de blocage de corde selon la revendication 1, caractérisé en ce que ledit moyen de logement (18) est ouvert au niveau de ladite première extrémité (44) et est fermé au niveau de ladite deuxième extrémité (48); ledit moyen formant piston (12) présente une tête (20), une partie de corps (26) et une partie de tige (34; 34a), ladite partie de corps (26) reliant ladite tête (20) à ladite partie de tige (34; 34a) et présentant ledit trou traversant (32) transversal s'étendant diamétralement en son sein; ledit moyen élastique est un ressort de pression (14) disposé sur ladite partie de tige (34; 34a) et ayant sa première extrémité en contact contre la partie de corps (26) et une deuxième extrémité; ladite bague de maintien (16) présente une partie montante (62) disposée dans la deuxième extrémité dudit ressort de pression (14); et ladite partie de verrouillage (41; 74) est formée sur ladite partie de tige (34; 34a) qui est déformable élastiquement vers l'intérieur par rapport à ladite partie de corps (26).

3. Dispositif de blocage de corde selon la revendication 2, caractérisé en ce que ladite partie de verrouillage comprend un couple de pattes élastiques (36a, 36b) ayant des dents de verrouillage (40), présentant des épaulements latéraux (41) pouvant s'engager de manière verrouillable contre une surface inférieure (66) de ladite bague de maintien (16).

4. Dispositif de blocage de corde selon la revendication 2, caractérisé en ce que ladite partie de verrouillage comprend une partie en forme de W (70) ayant des dents de verrouillage (72a, 72b) ainsi que des épaulements latéraux (74) pouvant s'engager de manière verrouillable contre une surface inférieure (66) de ladite bague de maintien (16).

5. Dispositif de blocage de corde selon la revendication 3 ou la revendication 4, caractérisé en ce que ledit moyen de libération comprend une cavité centrale (58) formée à l'intérieur de ladite extrémité fermée (48) dudit moyen de logement (18), pour permettre auxdites dents (40; 72a, 72b) de fléchir vers l'intérieur pour se désolidariser de ladite bague de maintien (16).

6. Dispositif de blocage de corde selon l'une quelconque des revendications précédentes, caractérisé en ce que ledit moyen de logement (18) présente une configuration globalement cylindrique et ledit moyen formant piston (12) présente également une configuration globalement cylindrique.

7. Dispositif de blocage de corde selon l'une quelconque des revendications précédentes, caractérisé en ce que ledit moyen formant piston (12) présente deux nervures (42) formées sur lui, maintenues par des bords dudit couple de trous (52a, 52b) plus proche de ladite première extrémité (44) dudit moyen de logement (18), de manière à empêcher toute désolidarisation dudit moyen formant piston (12) d'avec ledit moyen de logement (18).

8. Dispositif de blocage de corde selon la revendication 7, caractérisé en ce que ledit moyen de logement (18) présente des fentes (54) formées dans ladite paroi latérale extérieure (46), pour loger lesdites deux nervures (42).

9. Dispositif de blocage de corde selon l'une quelconque des revendications précédentes, caractérisé en ce que ledit moyen de logement (18) et ledit moyen formant piston (12) sont formés en un matériau hautement résistant.
